# EUROPÄISCHE PATENTSCHRIFT

(11) **EP 0 573 130 B1**
(45) Veröffentlichungstag und Bekanntmachung des Hinweises auf die Patenterteilung: **11.02.1998**
(21) Anmeldenummer: 93250101.8
(22) Anmeldetag: 02.04.1993
(51) Int. Cl.: B60R 1/06

(54) **Zusatzaussenspiegel**
Supplementary exterior mirror
Rétroviseur extérieur supplémentaire

(30) Priorität: 05.06.1992 DE 9207818 U
(43) Veröffentlichungstag der Anmeldung: 08.12.1993
(73) Patentinhaber: Bergkessel, Peter, 10555 Berlin (DE)
(72) Erfinder: Bergkessel, Peter, 10555 Berlin (DE)
(74) Vertreter: Christiansen, Henning, Dipl.-Ing.

(56) Entgegenhaltungen:
- DE-A- 2 556 604
- DE-U- 9 000 391
- DE-U- 9 000 393
- GB-A- 2 230 750
- US-A- 4 892 400

## Beschreibung

Die Erfindung betrifft einen Zusatzaußenspiegel der im Oberbegriff des Anspruchs 1 angegebenen Art und bezieht sich insbesondere auf einen zusätzlichen Außenspiegel für im Fahrschulbetrieb eingesetzte Kraftfahrzeuge.

Zusatzaußenspiegel für Kraftfahrzeuge sind in unterschiedlichster Ausführung bekannt und werden im wesentlichen aus dem Grunde an den Fahrzeugen installiert, um den für den Fahrer des Kraftfahrzeugs bei Benutzung des üblicherweise vorgesehenen Fahrzeugaußenspiegels störenden und häufig für Verkehrsunfälle verantwortlichen "toten Winkel" auszuschließen oder zumindest wesentlich zu verrringern. Darüberhinaus sind Zusatzaußenspiegel zwingend vorgeschrieben, wenn von Personenkraftwagen größere Anhänge-Fahrzeuge, beispielsweise Wohnanhänger, gezogen werden.

Aus der EP-A 0 437 695 ist ein Zusatzaußenspiegel für Kraftfahrzeuge bekannt, der mit einer, nach außen weisenden, stangenförmigen Halterung an dem Spiegelgehäuse des Fahrzeugspiegels befestigt wird. Die Halterung weist zwei Klemmorgane auf, die die Haltestange am oberen Öffnungsrand des Spiegelgehäuses fixieren.

Darüberhinaus ist aus dem DE-GM 79 10 818 eine Halterung für einen Zusatzspiegel bekannt, die einen zweiarmigen Haltebügel aufweist, mit der ein stangenartiger, sich vom Fahrzeugspiegel nach außen erstreckender und an seinem freien Ende den Zusatzspiegel haltender Tragarm verbunden ist. Der im wesentlichen starr ausgebildete Haltebügel wird auf das Gehäuse des Außenspiegels aufgeschoben und durch Klemmwirkung an diesem gehalten.

Eine weitere Art von Zusatzaußenspiegeln ist aus der DE-OS 25 56 604 bekannt. Das abnehmbare Rückspiegelpaar wird durch einen Haltesockel an den Längsrändern der Motorhaube des Kraftfahrzeugs befestigt, wobei die Haltesockel durch geeignete Verbindungsmittel gegeneinander verspannbar sind. Die Verstellbarkeit der Verbindungsmittel ermöglicht eine Anpassung an verschiedene Fahrzeugbreiten.

DE-U-9 000 391 beschreibt einen Zusatzaußenspiegel für Kraftfahrzeuge, mit einer am Spiegelgehäuse eines vorhandenen Fahrzeugaußenspiegels ohne bleibende mechanische Veränderung des Spiegelgehäuses zu befestigenden Halterung, welche den Rand des Fahrzeugaußenspiegels übergreifende Halteelemente aufweist und eine in zwei Haltelementen gehaltene, horizontal verlaufende Tragstange umfaßt, die ihrerseits ein zusätzliches Spiegelelement trägt. Hier sind vier Halteelemente vorgesehen, die zum Übergreifen des Spiegelrandes einen starren hakenförmigen Querschnitt aufweisen und von denen je zwei durch ein zugelastisches Koppelglied miteinander verbunden sind, welches entlang der Rückseite des Fahrzeugaußenspiegels geführt ist und jeweils ein dessen oberen Rand umgreifendes Halteelement und ein entsprechendes, seinen unteren Rand umgreifendes Halteelement mit dem betreffenden Rand in Eingriff hält. Das zusätzliche Spiegelelement ist seitlich vom Fahrzeugaußenspiegel angeordnet, und seine Höhe ist größer als seine Breite.

Die vorstehend beschriebenen Lösungen besitzen den wesentlichen Nachteil, daß ihre Anordnung am Fahrzeugaußenspiegel oder an der Karosserie zu einer beträchtlichen Vergrößerung der Gesamtbreite des Kraftfahrzeugs führt. Die Verwendung von stabförmigen Elementen als Träger des Gehäuses des Zusatzspiegels führt in ungünstiger Weise häufig zu Bildunschärfen, die durch Fahrzeugschwingungen hervorgerufen werden und in bestimmten Drehzahlbereichen besonders stark ausgeprägt sind. Es kommt hinzu, daß die Festigkeit des Sitzes der Befestigungselemente des Zusatzspiegels am Gehäuse des Fahrzeugaußenspiegels aufgrund fehlender Anpassmöglichkeit an die unterschiedlichen Baumaße der Fahrzeugaußenspiegel oft unzureichend ist und nur durch konstruktiv aufwendige und damit auch kostenintensive Klemmorgane, den Erfordernissen entsprechend, erhöht werden kann.

GB-A-2 230 750 beschreibt einen Zusatzaußenspiegel, der mittels einer elastischen Klammer auf dem oberen Rand des serienmäßigen Fahrzeugaußenspiegels angebracht wird. Die hier beschriebene Befestigung ist wenig sicher.

Ausgehend von den Mängeln des Standes der Technik liegt der Erfindung die Aufgabe zugrunde, einen Zusatzaußenspiegel der eingangs genannten Gattung anzugeben, der einen konstruktiv einfachen Aufbau aufweist, zuverlässig haltbar und weitgehend gegen unbeabsichtigtes Verstellen gesichert sowie ohne Veränderung der Gesamtbreite des Kraftfahrzeugs an unterschiedlich ausgebildete Fahrzeugaußenspiegeln befestigbar ist und darüberhinaus nur geringer Herstellungskosten bedarf.

Diese Aufgabe wird mit den Merkmalen des Anspruchs 1 gelöst.

Die Erfindung schließt die Erkenntnis ein, daß die ausreichend sichere und bei Bedarf lösbare Befestigung eines Zusatzaußenspiegels an einem Fahrzeugaußenspiegel mit teilweise erheblich unterschiedlichen Abmessungen auf vorteilhafte Weise durch zwei Halteelemente ermöglicht wird, die unter Verwendung eines elastischen Mittels verbunden sind. Durch eine direkte Befestigung an einem der Halteelemente kann der Zusatzaußenspiegel in günstiger Weise oberhalb des Fahrzeugaußenspiegels angeordnet werden, ohne daß die Gesamtbreite des Kraftfahrzeugs vergrößert wird. Diese Form der Anordnung des Zusatzspiegels ist insbesondere für Fahrschul-Fahrzeuge vorteilhaft, da dem Fahrlehrer durch einen derartig befestigten Zusatzspiegel ein Blickfeld zur Verfügung gestellt werden kann, welches im wesentlichen dem des Fahrschülers entspricht.

Nach der bevorzugten Ausführungsform der Erfindung weist die Halterung des Zusatzspiegels zwei, im wesentlichen gleichartig und hakenförmig ausgebildete Halteelemente auf. Der hakenförmige Bereich eines Halteelements besitzt zwei einzelne Haken, die jeweils ein U-förmiges Profil mit unterschiedlich langen Schenkeln aufweisen. Die Klemmkörper sind durch ein einzelnes Koppelglied miteinander verbunden, welches an der hakenfreien Längsseite der Halteelemente angreift und das sich im wesentlichen senkrecht zur Längsachse der Halteelemente erstreckt. Das Koppelglied ist in günstiger Weise stabförmig ausgebildet und weist sowohl in axialer als auch in radialer Richtung eine ausreichende Elastizität auf, um sich der Gehäuseform des Fahrzeugaußenspiegels bei Montage des Zusatzaußenspiegels anpassen zu können. Das U-Profil der Klemmkörper ist in seinen Abmaßen dem Profil des Öffnungsrandes des Gehäuses des Fahrzeugaußenspiegels angepaßt ausgebildet.

Entsprechend einer weiteren günstigen Weiterbildung der Erfindung ist das Koppelglied als gerade Schraubenfeder ausgebildet und durch zungenförmige Anschlußelemente beidseitig mit den Halteelementen verbunden. Um bei der Montage des Zusatzaußenspiegels eine Beschädigung des Spiegelgehäuses des Fahrzeugaußenspiegels zu vermeiden, ist jede Schraubenfeder mit einer elastischen, schlauchartigen Hülle versehen. Aus gleichen Gründen trägt die nach erfolgter Montage der Außenseite des Spiegelgehäuses zugewandte Seite des Halteelements eine elastische Zwischenlage, die vorzugsweise aus einem Moosgummi besteht. Die Zwischenlage dient gleichzeitig der Lagefixierung der Halteelemente auf dem Spiegelgehäuse des Fahrzeugaußenspiegels und wirkt einem Abrutschen derselben aufgrund der Fahrzeugschwingungen entgegen. Für die Erhöhung der Elastizität eines Koppelgliedes in radialer Richtung ist es von Vorteil, die gerade Schraubenfeder durch eine Mehrzahl einzelner Federelemente mit gleichem Durchmesser, jedoch geringerer Länge zu ersetzen.

Nach einer anderen vorteilhaften Weiterbildung der Erfindung besteht die Halterung für den Zusatzaußenspiegel aus einem Kunststoff-Spritzteil, welches Halteelemente, Anschlußelemente und ein Koppelglied aufweist. Der verwendete Kunststoff besitzt eine ausreichende Elastizität. Diese Elastizität ist auch für eine möglicherweise erforderliche Anpassung der Halteelemente an einen leicht gebogenen Öffnungsrand des Spiegelgehäuses des Fahrzeugaußenspiegels besonders günstig.

Eine zusätzliche Weiterbildung der Erfindung ermöglicht in günstiger Weise ein nachträgliches Verspannen der beiden Halteelemente an dem Spiegelgehäuse des Fahrzeugaußenspiegels. Dies geschieht durch Zusammenpressen eines Abschnitts des als Schraubenfeder ausgebildeten Koppelgliedes oder einzelner Federelemente desselben. Dazu sind an dem Koppelglied senkrecht zur Federachse angeordnete Zuganker vorgesehen, die durch einen Schraubbolzen verspannbar ausgebildet sind. Die durch Zusammenpressen eines Federabschnitts bzw. eines einzelnen Federelements bewirkte zusätzliche Dehnung der Schraubenfeder bzw. der restlichen Federelemente führt zu einer höheren Flächenpressung zwischen Halteelement und Öffnungsrand des Spiegelgehäuses. Für bestimmte Anwendungen, beispielsweise bei Benutzung einer automatischen Waschanlage für Kraftfahrzeuge, ist es von Vorteil, den Zusatzaußenspiegel auf einfache Art und Weise abnehmbar an einem der Halteelemente zu befestigen. Die dazu erforderlichen Befestigunsmittel sind vorzugsweise als Schwalbenschwanzführung oder Bajonett-Verbindung ausgebildet.

Bei einer anderen bevorzugten Ausführungsform der Erfindung ist zur zusätzlichen Sicherung des Zusatzaußenspiegels zwischen seinen das feste Spiegel gehäuse umgreifenden Halteelementen ein lösbares textiles Zugband vorgesehen, welches insbesondere mittels einer Schnalle als zusätzliche Sicherung durch entsprechende Ösen nachträglich anbringbar ist.

Insbesondere können auch die Halteelemente eine unterschiedliche Länge aufweisen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: die perspektivische Ansicht einer bevorzugten Ausführungsform der Erfindung in schematisierter Darstellung,
- Figur 2: eine Seitenansicht der in Figur 1 schematisiert dargestellten Ausführungsform der Erfindung,
- Figur 3: die persektivische Darstellung eines, einen erfindungsgemäßen Zusatzaußenspiegel tragenden Fahrzeugaußenspiegels,
- Figur 4: die Draufsicht auf eine vorteilhafte Weiterbildung der Erfindung in schematisierter Darstellung,
- Figur 5: die Draufsicht auf eine andere Weiterbildung der Erfindung in schematisierter Darstellung,
- Figur 6: eine Weiterbildung der in Figur 4 gezeigten Form der Erfindung als schematisiert dargestellter Teilschnitt,
- Figur 7: eine Weiterbildung der in Figur 6 dargestellten Form der Erfindung,
- Figur 8: die Seitenansicht eines Details einer vorteilhaften Ausführungsform der Erfindung sowie
- Figur 9: eine zusätzliche Weiterbildung der Erfindung in perspektivischer Darstellung.

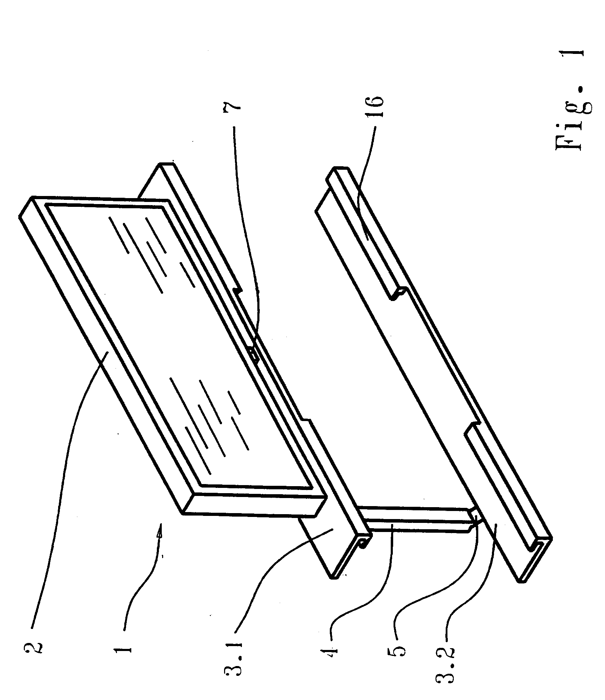

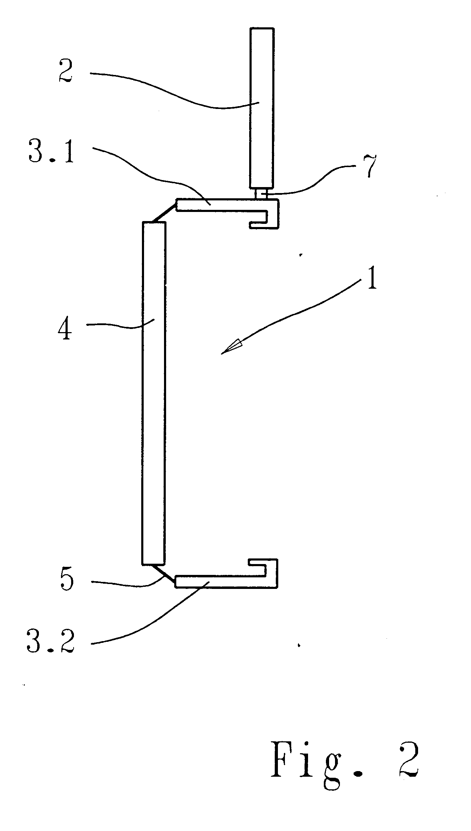

Der in den Figuren 1 und 2 dargestellte erfindungsgemäße Zusatzaußenspiegel 1 besteht aus zwei hakenförmig ausgebildeten Halteelementen 3.1, 3.2, die durch ein Koppelglied 4 miteinander verbunden sind. Das Koppelglied 4 ist über zungenförmig ausgebildete Anschlußelemente 5 und 5a an der Längsseite der Halteelemente 3.1, 3.2 angeordnet, die kleine Klemmhaken 16 aufweist. Das Halteelement 3.1 trägt, im wesentlichen mittig angeordnet, an seiner Oberseite ein zusätzliches Spiegelelement 2. Zur Verbindung zwischen Halteelement 3.1 und zusätzlichem Spiegelelement 2 ist ein Befestigungsmittel 7 vorgesehen, über welches das zusätzliche Spiegelelement 2 sowohl beweglich angelenkt als auch lösbar befestigt ist.

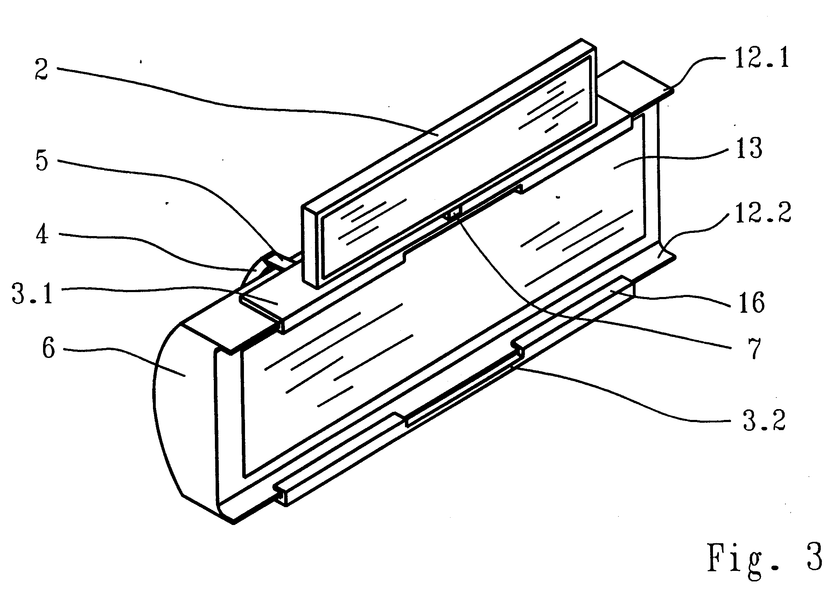

Figur 3 zeigt einen Fahrzeugaußenspiegel 6 mit einem erfindungsgemäßen Zusatzaußenspiegel. Das zusätzliche Spiegelelement 2 ist an der Oberseite des Fahrzeugspiegels 6 angeordnet und ermöglicht in günstiger Weise, daß das von einem Fahrschüler über den Fahrzeugaußenspiegel 6 wahrgenommene Spiegelbild auch von dem Fahrlehrer mit im wesentlichen gleicher Informationsmenge erfaßt werden kann. Die Anordnung des zusätzlichen Spiegelelements 2 an der Oberseite des Fahrzeugaußenspiegels 6 führt zu keiner Erhöhung der Breite des Kraftfahrzeugs und ist dadurch für die Verbesserung der Verkehrssicherheit von Vorteil. Bei Befestigung des Zusatzaußenspiegels umgreifen die Halteelemente 3.1, 3.2 den oberen und unteren Randbereich 12.1, 12.2 des Spiegelgehäuses des Fahrzeugaußenspiegels 6 und werden durch das elastische Koppelglied 4 an den Gehäuserand gepreßt. Die hakenförmigen Halteelemente 3.1, 3.2 liegen dabei nicht im Bereich des Spiegelglases 13, so daß nach Anbringen des Zusatzaußenspiegels keine Reduzierung des Blickfeldes des Fahrzeugaußenspiegels 6 eintritt. Durch die sowohl axiale als auch radiale Elastizität paßt sich das Koppelglied 4 in günstiger Weise an die Außenwölbung des Spiegelgehäuses des Fahrzeugaußenspiegels 6 an und sorgt dadurch für einen festen Sitz des Zusatzaußenspiegels.

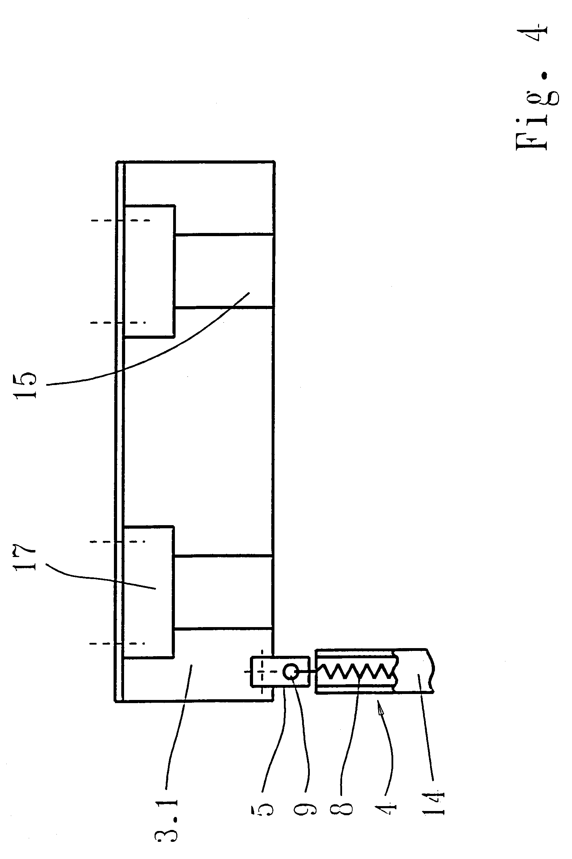

Die in Figur 4 dargestellte Weiterbildung der Erfindung zeigt ein Koppelglied 4, das aus einer umhülllten Schraubenfeder 8 besteht. Die Umhüllung 14 dient dem Schutz des Spiegelgehäuses des Fahrzeugaußenspiegels nach erfolgter Montage des Zusatzaußenspiegels. Das zungenförmige Anschlußelement 5 weist eine Bohrung 9 auf, in welche die Schraubenfeder 8 einhängt ist. Die Klemmkörper 3 sind winkelförmig ausgebildet und weisen an zwei Stellen eine Verbindung mit einem weiteren Winkel 17 auf, so daß zwei hakenförmige Bereiche entstehen. Die bei der Montage der erfindungsgemäßen Spiegelvorrichtung dem Fahrzeugaußenspiegel gehäuse zugewandte Seite des Halteelements 3.1 trägt im Bereich der Haken eine Zwischenlage 15 aus Moosgummi, die das Spiegelgehäuse vor mechanischer Beschädigung schützt und gleichzeitig für einen relativ festen Sitz des Zusatzaußenspiegels sorgt.

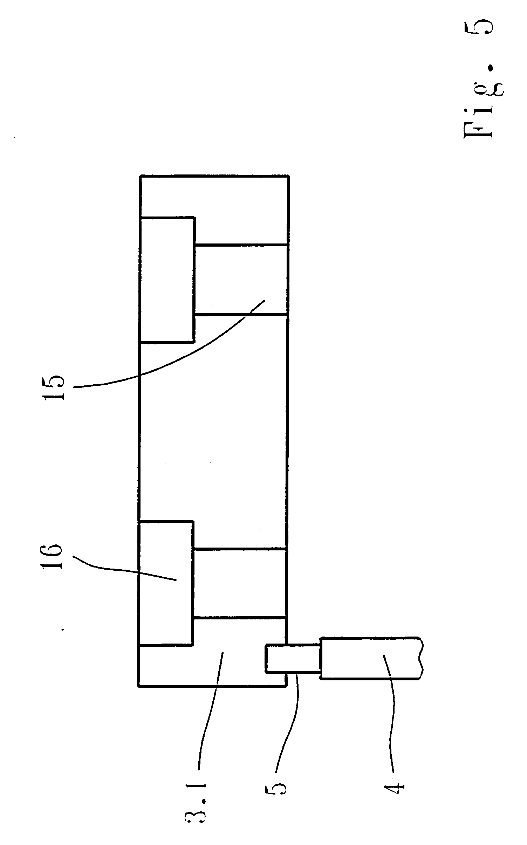

Bei der in Figur 5 schematisiert dargestellten Weiterbildung der Erfindung besteht die Halterung für den Zusatzaußenspiegel aus einem einstückigen Kunststoff-Spritzteil, wobei das Koppelglied 4 mit dem Anschlußelement 5 und auch die Haken 16 an das Halteelement 3.1 angeformt sind. Das Koppelglied 4 ist streifenförmig ausgebildet und besonders in Längsrichtung dehnbar. Die Elastizität des verwendeten Kunststoffes sichert in günstiger Weise eine Verformungsfähigkeit der Halteelemente 3.1, 3.2 in deren Längsrichtung. Dadurch können sich diese an eine leichte Krümmung des Öffnungsrandes des Spiegelgehäuses anpassen, wenn der Zusatzaußenspiegel am Fahrzeugaußenspiegel gehäuse angebracht wird. Die aus Moosguumi bestehende Zwischenlage 15 wird im Bereich der Haken 16 auf der Innenseite der Klemmkörper 3 auf einfache Weise durch Verkleben befestigt.

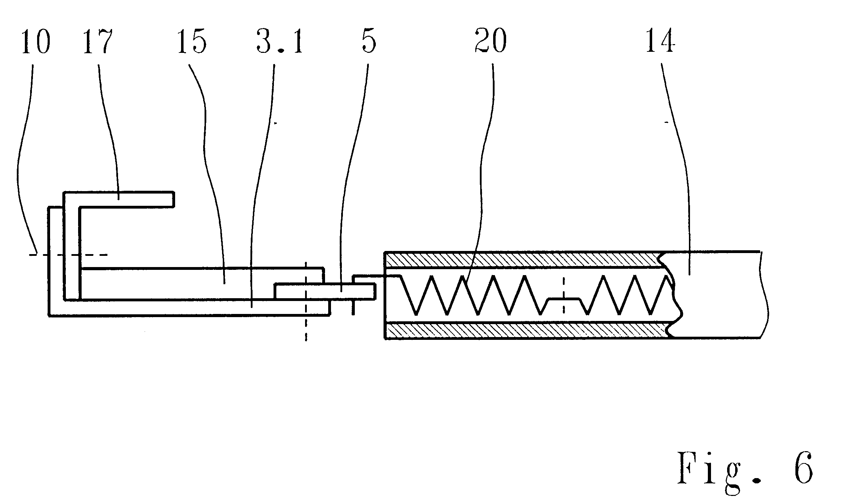

Bei der in Figur 6 in Seitenansicht gezeigten Weiterbildung der Erfindung besteht das elastische Koppelglied aus einer Mehrzahl einzelner, im wesentlichen gleichartig ausgebildeter Federelemente 20, für welche eine gemeinsame Umhüllung 14, vorgesehen ist. Die Federelemente 20 sind untereinander, beispielsweise durch Einhaken oder mittels eines Hohlniets, beweglich miteinander verbunden. Das jeweils letzte Federelement 20 ist durch Einhängen in eine Ausnehmung des zungenförmigen Anschlußelements 5 an dem Halteelement 3.1 befestigt. Das Halteelement 3.1 ist als ungleichschenkliger Winkel ausgebildet, dessen kurzer Schenkel zwei Winkelstücke 17 aufweist, die unter Einhaltung eines bestimmten Abstandes zueinander, jeweils durch einen Niet 10 an dem Halteelement 3.1 befestigt sind. Die Weite der dadurch entstehenden Haken ist unter Beachtung der Elastizität der, in günstiger Weise aus Moosgummi bestehenden Zwischenlage 15 so gewählt, daß Maßtoleranzen der Materialstärke des Öffnungsrandes des Spiegelgehäuses von Fahrzeugaußenspiegeln verschiedener Hersteller bei der Montage des Zusatzaußenspiegels nicht ins Gewicht fallen.

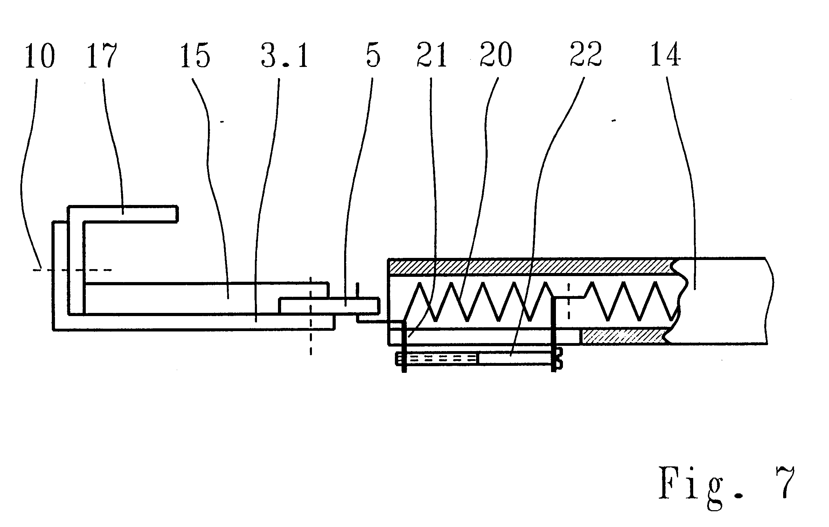

Für eine Erhöhung der Sitz- bzw. Lagestabilität eines montierten Zusatzaußenspiegels ist es von Vorteil, diesen zusätzlich zwecks Erhöhung der Klemmwirkung der Halterung verspannbar auszubilden. Die in Figur 7 als Teilschnitt dargestellte Seitenansicht eines Halteelements 3.1 nebst aus Federelementen 20 bestehendem Koppelglied zeigt eine Spannvorrichtung, die zwei Zuganker 21 und einen Schraubbolzen 22 aufweist. Bei Anziehen des Schraubbolzens 22 wird das entsprechende Federelement 20 zusammengepreßt, wogegen die restlichen Federelemente 20 einer Dehnung unterworfen werden. Insgesamt erhöht sich dadurch die Anpreßwirkung der Halteelemente. Das Verspannen kann auf einfache Weise nach erfolgter Montage des Zusatzaußenspiegels durchgeführt werden. Diese Form der Verspannung ist gleichermaßen auch für aus einer Schraubenfeder bestehenden Koppelglieder anwendbar.

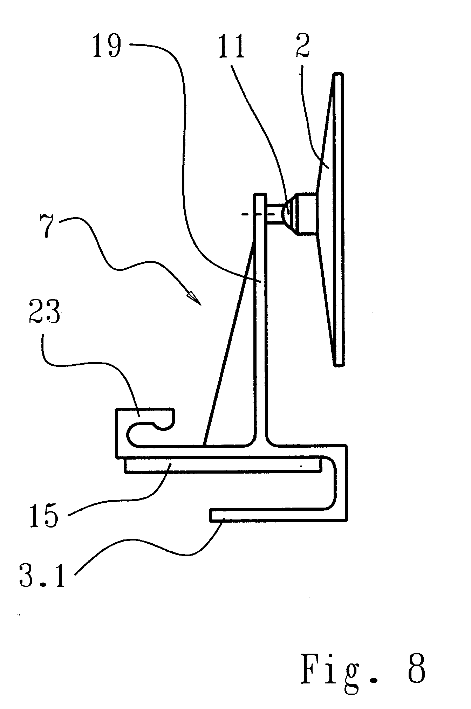

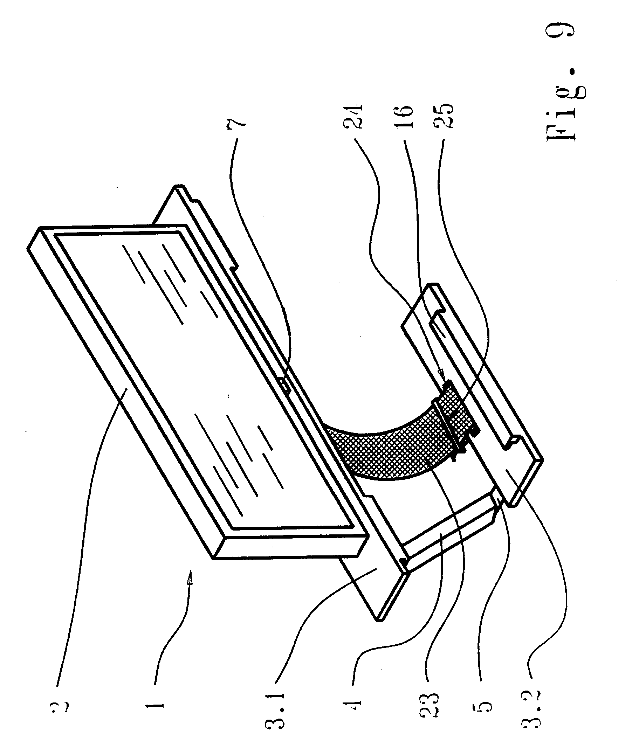

In Figur 8 ist eine vorteilhafte Form der Befestigung des zusätzlichen Spiegelelements 2 an einem der Halteelemente 3.1 als Seitenansicht dargestellt. Das hierfür benutzte Befestigungsmittel 7 besteht aus einem winkelförmig ausgebildeten Fuß 19, der an das Halteelement 3.1 angeformt ist. An seinem freien Ende weist der Fuß 19 ein Kugelgelenk 11 auf, das selbsthemmend und damit arretierbar ausgebildet ist und das zusätzliche Spiegelelement 2 trägt. Das Halteelement 3.1 trägt auf der Seite, an der sich der Fuß 19 befindet, Haken 23, an denen die Koppelglieder (Position 4 in Figur 9) befestigt werden können. Zur elastischen Anordnung des Zusatzspiegels 2 dient die Zwischenlage 15. Diese Form der Aufsattelung eines zusätzlichen Spiegelelements 2 ermöglicht bei Fahrschulfahrzeugen dem Fahrlehrer in vorteilhafter Weise die Überwachung des Blickfeldes eines Fahrschülers, ohne daß die Gesamtbreite des Fahrschulfahrzeuges durch die zusätzliche Spiegelvorrichtung vergrößert wird.

In einigen Fällen ist es günstig, das zusätzliche Spiegelelement 2 lösbar an einem der Halteelemente 3.1 zu befestigen. Die Nietverbindung 18 wird dazu durch eine schwalbenschwanzartige Steckverbindung oder durch einen bajonettverschlußähnliche Verriegelung zwischen Halteelement 3.1 und Fuß 19 ersetzt, die in der Zeichnung nicht dargestellt sind. An der Innenseite des als spitzwinkliges Profil ausgestalteten Fußes 19 ist eine dreiecksförmige Versteifungsrippe 23 vorgesehen, welche sich senkrecht zu den Richtungen der Winkelflächen erstreckt und eine Sperre gegen ungewollte Veränderungen der Winkelstellung bildet. Damit ist auch bei höheren Fahrgeschwindigkeiten eine Fehleinstellung des zusätzlichen Spiegels aufgrund der Luftanströmung verhindert.

Der in Figur 9 in schematisierter Form (bei fortgelassenem Hauptspiegel) dargestellte Zu-satzaußenspiegel 1 weist zwei Halteelemente 3.1 und 3.2, von unterschiedlicher Länge auf. Diese Ausführungsform des Zusatzaußenspiegels 1 ist besonders für Fahrzeuge mit einem Außenspiegelmodell günstig, deren Spiegelgehäuse mit einer sich in Richtung der Spiegelmitte verjüngenden unteren Gehäusekante versehen ist.

Zur Vermeidung der Folgen eines Federbruches, für den Fall, daß das Koppelglied 4 als Zugfeder ausgestaltet ist, ist ein Sicherungsband 23 vorgesehen, welches durch eine Aussparung 24 des Halteelements 3.2 (um eine in der Zeichnung verdeckte entsprechende Aussparung des Halteelements 3.1) hindurchgeführt ist. Dieses Sicherungsband besteht aus einem hochfesten Gewebewerkstoff und ist mittels einer Schnalle 25, durch die eines seiner Enden hindurchgeführt ist, lösbar befestigt, so daß ein Verlieren des Zusatzaußenspiegels sicher verhindert ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Zusatzaußenspiegel (1) für Kraftfahrzeuge, mit einer am Spiegelgehäuse ein vorhandenen Fahrzeugaußenspiegels (6) ohne bleibende mechanische Veränderung des Spiegelgehäuses zu befestigenden Halterung, welche den Rand (12.1, 12.2) des Fahrzeugaußenspiegelgehäuses übergreifende Halteelemente (3.1, 3.2) aufweist, und ein zusätzliches Spiegelelement (2) trägt, wobei
die Halteelemente (3.1, 3.2) zum Übergreifen des Spiegelgehäuserandes einen starren hakenförmigen Querschnitt aufweisen und durch genau ein zugelastisches Koppelglied (4) miteinander verbunden sind, welches entlang der Rückseite des Fahrzeugaußenspiegelgehäuses geführt ist und, jeweils ein dessen oberen Rand (12.1) umgreifendes Halteelement (3.1) und ein entsprechendes, seinen unteren Rand (12.2) umgreifendes Halteelement (3.2) mit dem betreffenden Rand in Eingriff hält sowie
das zusätzliche Spiegelelement (2) mit ein Haltelement (3.1) verbunden ist und an der Oberseite des Fahrzeugaußenspiegelgehäuses in im wesentlichen paralleler Erstreckung zu dessen Rand (12.1) gehalten ist, den das Halteelement (3.1) umgreift, mit dem das zusätzliche Spiegelelement (2) verbunden ist.

2. Zusatzaußenspiegel nach Anspruch 1, **dadurch gekennzeichnet,** daß das zusätzliche Spiegelelement (2) im wesentlichen rechteckig ausgebildet ist

3. Zusatzaußenspiegel nach Anspruch 2, **dadurch gekennzeichnet,** daß die Vertikalerstreckung des zusätzlichen Spiegelelements (2) kleiner ist als seine Quererstreckung.

4. Zusatzaußenspiegel nach einem der vorangehenden Ansprüche, **dadurch gekennzeichnet,** daß die Halteelemente (3.1, 3.2) an einer ihrer Längsseiten einen hakenförmigen Bereich (16) aufweisen.

5. Zusatzaußenspiegel nach Anspruch 4, **dadurch gekennzeichnet,** daß der hakenförmige Bereich (16) das Halteelement (3.1, 3.2) zu einem im wesentlichen U-förmigen Querschnittsprofil ergänzt.

6. Zusatzaußenspiegel nach Anspruch 5, **dadurch gekennzeichnet,** daß der den hakenförmigen Bereich bildende freie Schenkel des U-förmigen Profils kürzer ausgebildet ist als dessen anderer freier Schenkel.

7. Zusatzaußenspiegel nach einem der vorangehenden Ansprüche, **dadurch gekennzeichnet,** daß das Koppelglied (4) mindestens eine Schraubenfeder (8) und ein textiles Zugband (23) aufweist, welches mittels einer Schnalle (25) als zusätzliche Sicherung durch entsprechende Ösen (24) angebracht ist, wobei vorzugsweise zwischen Halteelement (3.1, 3.2) und Koppelglied (4) jeweils ein zungenförmiges Verbindungselement (5, 5a) vorgesehen ist.

8. Zusatzaußenspiegel nach einem der vorangehenden Ansprüche, **dadurch gekennzeichnet,** daß Halteelement (3.1, 3.2), Verbindungselement (5) und/oder Koppelglied (4) als Kunststoff-Spritzteil ausgebildet sind.

9. Zusatzaußenspiegel nach einem der Ansprüche 7 oder 8, **dadurch gekennzeichnet**, daß das Koppelglied (8) eine elastische Umhüllung (14) aufweist.

10. Zusatzaußenspiegel nach einem der vorangehenden Ansprüche, **dadurch gekennzeichnet,** daß das Halteelement (3.1, 3.2) in einem dem Gehäuse des vorhandenen Fahrzeugspiegels (6) zugewandten Bereich eine elastische Zwischenlage (15) aufweist, die insbesondere im Bereich der hakenförmigen Bereiche (16) angeordnet ist und/oder aus Moosgummi besteht.

11. Zusatzaußenspiegel nach einem der Ansprüche 8 bis 10, **dadurch gekennzeichnet,** daß zur Erhöhung der Vorspannung des zugelastischen Koppelglieds (4) ein zusätzliches in betätigtem Zustand eine Verkürzung des Koppelglieds (4) bewirkendes Spannmittel (21, 22) vorgesehen ist, welches insbesondere als ein durch einen Bolzen (22) ver- oder vorspannbarer Zuganker (21) ausgebildet ist.

12. Zusatzaußenspiegel nach einem der vorangehenden Ansprüche, **dadurch gekennzeichnet,** daß genau zwei Halteelemente (3.1, 3.2) vorgesehen sind, die den oberen bzw. den unteren Rand (12.1, 12.2) des Fahrzeugaußenspiegelgehäuses umgreifen.

13. Zusatzspiegel nach einem der vorangehenden Ansprüche, **dadurch gekennzeichnet,** daß das zusätzliche Spiegelelement (2) mittels eines arretierbaren oder selbsthemmenden Kugelgelenks (11) mit dem Halteelement (3.1) verbunden ist.

## Claims

1. An additional outer mirror for motor vehicles, with holding means which is to be fastened to the mirror housing of an existing vehicle mirror (6) without permanent mechanical alteration being made to the mirror housing, which has holding elements (3.1,3.2) which embrace the edge (12.1,12.2) of the vehicle outer mirror housing and which carries an additional mirror element (2), wherein
the holding elements (3.1, 3.2) have a rigid hook-shaped cross-section for embracing the mirror housing edge and are connected to each other via exactly one elastic coupling member (4) which runs along the reverse side of the vehicle outer mirror housing and keeps in place a holding element (3.1) which embraces an upper edge (12.1) thereof and a holding element (3.2) which embraces a lower edge (12.2) thereof, and also
the additional mirror element (2) is connected via a holding element (3.1) and is held in substantially parallel extension to the edge (12.1) of the upper side of the vehicle outer mirror housing which is embraced by the holding element (3.1) to which the additional mirror element (2) is connected.

2. An additional outer mirror according to claim 1, characterised in that the additional mirror element (2) is substantially rectangular.

3. An additional outer mirror according to claim 2, characterised in that the vertical extent of the additional mirror element (2) is shorter than its horizontal extent.

4. An additional outer mirror according to one of the preceding claims, characterised in that the holding elements (3.1, 3.2) have a hook-shaped area (16) on one of their longitudinal sides.

5. An additional outer mirror according to claim 4, characterised in that the hook-shaped area (16) supplements the holding elements (3.1, 3.2) to form a substantially U-shaped cross-sectional profile.

6. An additional outer mirror according to claim 5, characterised in that the free arm of the U-shaped profile which forms the hook-shaped area is shorter than the other free arm of the U-shaped profile.

7. An additional outer mirror according to one of the preceding claims, characterised in that the coupling member (4) has at least one helical spring (8) and a textile tension band (23) which is fastened by means of a catch (25) for additional security via corresponding lugs (24), a respective tongue-shaped connecting element (5, 5a) being preferably provided between each holding element (3.1, 3.2) and coupling member (4).

8. An additional outer mirror according to one of the preceding claims, characterised in that the holding element (3.1, 3.2), connecting element (5) and/or coupling member (4) are formed as plastic injection moulded parts.

9. An additional outer mirror according to one of claims 7 and 8, characterised in that the coupling member (8) has an elastic cover (14).

10. An additional outer mirror according to one of the preceding claims, characterised in that the holding element (3.1, 3.2) has an elastic insert in an area facing the existing vehicle mirror housing, which is in particular arranged in the region of the hook-shaped regions (16) and/or is made from foam rubber.

11. An additional outer mirror according to one of claims 8 to 10, characterised in that in order to raise the preload of the elastic coupling member (4), an additional tensioning means (21, 22), which shortens the coupling member when activated, is provided, which is in particular designed as a tension rod (21), being spanned or pre-tensioned via a bolt (22).

12. An additional outer mirror according to one of the preceding claims, characterised in that exactly two holding elements (3.1, 3.2) are provided which embrace the upper and lower edges (12.1, 12.2) of the vehicle outer mirror housing.

13. An additional outer mirror according to one of the preceding claims, characterised in that the additional mirror element (2) is connected to the holding element (3.1) by means of a lockable or self-locking ball-joint (11).

## Revendications

1. Rétroviseur extérieur supplémentaire (1) pour véhicules automobiles, comprenant une monture destinée à être fixée au boîtier d'un rétroviseur extérieur de véhicule déjà présent sans modification mécanique permanente du boîtier du rétroviseur, monture qui présente des éléments de fixation (3.1, 3.2) qui emboîtent le bord (12.1, 12.2) du boîtier du rétroviseur extérieur du véhicule, et portent un élément de rétroviseur supplémentaire (2), cependant que, pour emboîter le bord du boîtier du rétroviseur, les éléments de fixation (3.1, 3.2) présentent une section transversale rigide en forme de crochet, et sont reliés l'un à l'autre par un organe d'accouplement (4) élastique à la traction, qui est passé le long de la face arrière du boîtier du rétroviseur extérieur du véhicule et maintient un élément de fixation (3.1) qui emboîte le bord supérieur (12.1) de ce boîtier et un élément de fixation correspondant (3.2) qui emboîte son bord inférieur (12.2), en prise chacun avec le bord correspondant, l'élément de rétroviseur supplémentaire (2) étant relié à un élément de fixation (3.1) et étant tenu au bord supérieur du boîtier du rétroviseur extérieur du véhicule en s'étendant sensiblement parallèlement au bord (12.1) de ce boîtier, qui est emboîté par l'élément de fixation (3.1) auquel l'élément de rétroviseur supplémentaire (2) est relié.

2. Rétroviseur extérieur supplémentaire selon la revendication 1, caractérisé en ce que l'élément de rétroviseur supplémentaire (2) est de configuration sensiblement rectangulaire.

3. Rétroviseur extérieur supplémentaire selon la revendication 2, caractérisé en ce que la dimension verticale de l'élément de rétroviseur supplémentaire (2) est plus petite que sa dimension transversale.

4. Rétroviseur extérieur supplémentaire selon une des revendications précédentes, caractérisé en ce que les éléments de fixation (3.1, 3.2) présentent une région (16) en forme de crochet le long d'un de leurs côtés longitudinaux.

5. Rétroviseur extérieur supplémentaire selon la revendication 2, caractérisé en ce que la région (16) en forme de crochet complète l'élément de fixation (3.1, 3.2) pour former un profil ayant une section transversale sensiblement en forme de U.

6. Rétroviseur extérieur supplémentaire selon la revendication 5, caractérisé en ce que la branche libre du profil en forme de U qui forme la région en forme de crochet est de configuration plus courte que l'autre branche libre de ce profil.

7. Rétroviseur extérieur supplémentaire selon une des revendications précédentes, caractérisé en ce que l'organe d'accouplement (4) comprend au moins un ressort hélicoïdal (8) et une sangle textile (23) qui est montée, au moyen d'une boucle (25), en tant que sécurité supplémentaire, à travers des oeillets correspondants (24), cependant qu'il est de préférence prévu un élément de liaison (5, 5a) en forme de languette entre chaque élément de fixation (3.1, 3.2) et l'organe d'accouplement.

8. Rétroviseur extérieur supplémentaire selon une des revendications précédentes, caractérisé en ce que l'élément de fixation (3.1, 3.2), l'élément de liaison (5) et/ou l'organe d'accouplement (4) sont réalisés sous la forme d'une pièce moulée en matière plastique.

9. Rétroviseur extérieur supplémentaire selon une des revendications 7 et 8, caractérisé en ce que l'organe d'accouplement (8) présente un gainage élastique (14).

10. Rétroviseur extérieur supplémentaire selon une des revendications précédentes, caractérisé en ce que l'élément de fixation (3.1, 3.2) présente, dans une région dirigée vers le boîtier du rétroviseur (6) du véhicule déjà présent, une couche intercalaire élastique (15) qui est agencée en particulier dans la zone des régions (16) en forme de crochet et/ou est composée de mousse de caoutchouc.

11. Rétroviseur extérieur supplémentaire selon une des revendications 8 à 10, caractérisé en ce que, pour renforcer la tension de précontrainte de l'organe d'accouplement (4) élastique à la traction, il est prévu un moyen de serrage (21, 22) supplémentaire, qui détermine, à l'état actionné, un raccourcissement de l'organe d'accouplement et qui est réalisé en particulier sous la forme d'un tirant (21) qui peut être mis en tension ou précontraint par une vis (22).

12. Rétroviseur extérieur supplémentaire selon une des revendications précédentes, caractérisé en ce qu'il est prévu exactement deux éléments de fixation (3.1, 3.2) qui emboîtent respectivement le bord supérieur et le bord inférieur (12.1, 12.2) du boîtier du rétroviseur extérieur du véhicule.

13. Rétroviseur extérieur supplémentaire selon une des revendications précédentes, caractérisé en ce que l'élément du rétroviseur supplémentaire (2) est relié à l'élément de fixation (3.1) au moyen d'une articulation à rotule (11) pouvant être verrouillée ou autobloquante.
